Europäisches Patentamt

European Patent Office

Office européen des brevets

(11) Veröffentlichungsnummer: **0 086 241**
**A1**

(12) # EUROPÄISCHE PATENTANMELDUNG

(21) Anmeldenummer: **82101036.0**

(51) Int. Cl.³: **B 60 P 3/22,** B 60 P 1/60

(22) Anmeldetag: **12.02.82**

(43) Veröffentlichungstag der Anmeldung: **24.08.83**
**Patentblatt 83/34**

(71) Anmelder: **Feldbinder Spezialfahrzeugwerk GmbH,**
**Gutenbergstrasse 12, D-2090 Winsen/Luhe (DE)**

(72) Erfinder: **Feldbinder, Otto,**
**D-3044 Neuenkirchen (DE)**
Erfinder: **Beckmann, Jan-Dirk, Vosskamp 16,**
**D-2090 Winsen/Luhe (DE)**

(84) Benannte Vertragsstaaten: **AT BE CH DE FR GB IT LI LU**
**NL SE**

(74) Vertreter: **Patentanwälte Dipl.-Ing. J. Richter Dipl.-Ing. F.**
**Werdermann, Neuer Wall 10, D-2000 Hamburg 36 (DE)**

(54) **Sattelkraftfahrzeug zum Transport von staub- und fliessfähigen Produkten, insbesondere von Kohlenstaub.**

(57) Sattelkraftfahrzeug (100), insbesondere zum Transport von Kohlenstaub, dessen Silo-Sattelauflieger (10) durch Verschwenken eines Tragrahmens (20) in seine Entleerungsstellung überführbar ist, wobei der Tragrahmen (20) einen Teil der Aufliegereinrichtung (21) bildet.

Sattelkraftfahrzeug zum Transport von staub- und fließfähigen Produkten, insbesondere von Kohlenstaub

Die Erfindung bezieht sich auf ein Sattelkraftfahrzeug zum Transport von staub- und fließfähigen Produkten, insbesondere von Kohlenstaub, bestehend aus einer Sattelzugmaschine und einem Silo-Sattelauflieger.

Für den Transport von Baustoffen, Lebensmitteln, chemischen Produkten, Futtermitteln und Kohlenstaub in Granulat- und Mehlform sind Silo-Fahrzeuge in den verschiedenstens Ausführungsformen bekannt. Neben Sattelkraftfahrzeugen mit einem Silo-Sattelauflieger in Form eines freitragenden Druckbehälters mit bodenseitigen Entleerungsklappen für eine pneumatische Entleerung werden auch Kipp-Silo-Sattelauflieger verwendet, bei denen der Druckbehälter vermittels einer hydraulischen Kippeinrichtung in eine Winkelstellung von 45° bis 60° anhebbar ist, um den Druckbehälter entleeren zu können. Die für das Anheben des Druckbehälters verwendeten Kippeinrichtungen sind als hydraulisch betätigbare Arbeitszylinder ausgebildet, die an dem der Sattelzugmaschine zugekehrten Ende des Druckbehälters angreift, wobei ein hoher Energieaufwand erforderlich ist, um den Druckbehälter in die Entleerungsstellung zu überführen. Hinzu kommt noch, daß jeweils in Abhängigkeit von der Länge des Druckbehälters der Arbeitszylinder entsprechend ausgelegt und entsprechende Abmessungen aufweisen muß.

Bei allen diesen bekannten Silo-Fahrzeugen mit pneumatischer Entleerung des Druckbehälterinhaltes oder mit kippbaren Druckbehältern sind für das Entleeren hoher Arbeitsleistungen mit einem entsprechenden Energieaufwand erforderlich, da für die pneumatische Entleerung des Transportbehälterinhaltes der Behälter seine waagerechte Stellung beibehält, während bei der Verwendung von Kippdruckbehältern diese in eine Kippstellung übergeführt werden müssen. Bei den Kipp-Silo-Sattelaufliegern kommt noch hinzu, daß diese aufwendige gewichtserhöhende Rahmenkonstruktionen aufweisen müssen, die den Kippdruckbehälter aufnehmen, wodurch die Nutzlast verringert wird.

Hier will die Erfindung Abhilfe schaffen. Die Erfindung löst die Aufgabe, ein Sattelkraftfahrzeug zu schaffen, bei dem ein freitragender Druckbehälter ohne Rahmenkonstruktion bei gleichzeitiger Verringerung des Eigengewichtes und Erhöhung der Nutzlast in eine Entleerungsstellung mit geringstem Energieaufwand überführt werden kann und mit dem ein kostensparender Transport von staub- und fließfähigen Produkten, insbesondere von Kohlenstaub ermöglicht wird.

Zur Lösung dieser Aufgabe sieht die Erfindung ein Sattelkraftfahrzeug zum Transport von staub- und fließfähigen Produkten, insbesondere von Kohlenstaub, bestehend aus einer Sattelzugmaschine und einem Silo-Sattelauflieger vor, das in der Weise ausgebildet ist, daß

a) der Silo-Sattelauflieger als freitragender, mit Einfüllöffnungen versehener Druckbehälter mit im rückwärtigen Endbereich vorgesehener Entleerungseinrichtung und angeordnetem eine oder mehrere Radachsen aufweisenden Achsaggregat ausgebildet ist,

b) an dem Druckbehälter vor dem Achsaggregat ein Tragrahmen einendig angelenkt ist, dessen anderes freies Ende die Aufliegeeinrichtung für die Sattelkupplung trägt,

c) benachbart zum Anlenkungspunkt des Tragrahmens an dem Druckbehälter ein, vorzugsweise druckluftbetriebener, Arbeitszylinder auf dem Tragrahmen angeordnet ist, dessen Arbeitskolben über ein Schwenkgelenk mit dem Druckbehälter verbunden ist, und daß

d) das dem Achsaggregat abgekehrte Ende des Druckbehälters über eine Verriegelungseinrichtung im Bereich der Aufliegeeinrichtung des Tragrahmens mit diesem oder mit dem Fahrzeugrahmen der Sattelzugmaschine lösbar verbunden ist.

Die durch die Erfindung erreichten Vorteile sind im wesentlichen darin zu sehen, daß mit einem derart ausgebildeten Sattelkraftfahrzeug das Entleeren von staub- und fließfähigen Produkten, insbesondere von Kohlenstaub, bereits schon bei einer Winkelstellung von etwa 12° des Druckbehälters möglich ist, so daß keine aufwendigen hydraulischen Kippeinrichtungen benötigt werden. Das Überführen des Druckbehälters des Sattelkraftfahrzeuges in die Entleerungsstellung erfolgt mittels eines, kleinste Abmessungen aufweisenden Arbeitszylinders, der druckluftbetrieben ist und daher wirtschaftlich arbeitet, da Druckluft bei derartigen Sattelkraftfahrzeugen zur Verfügung steht. Dadurch, daß ein selbsttragender Druckbehälter verwendet wird, entfallen aufwendige und gewichtserhöhende Rahmenkonstruktionen zum Aufnehmen des Druckbehälters. Außerdem entfallen Gelenkverbindungen zwischen dem Druckbehälter und dem Rahmen des Sattelaufliegers, um den Druckbehälter in die Kippstellung verschwenken zu können, da für den Entleerungsvorgang der gesamte Druckbehälter mit seinem Achsaggregat bei gleichzeitigem Verschwenken um seine letzte Radachse in die Entleerungsstellung verschwenkt wird.

Der mit der Aufliegeeinrichtung als Teil der Sattelkupplung versehene Tragrahmen, der mit seinem anderen Ende scharnierartig an dem Druckbehälter angelenkt ist, braucht keine hohe Eigenstabilität aufzuweisen, da der Tragrahmen ausschließlich zur Aufnahme der Schwenkhydraulik dient. Dadurch,daß für den Transport der Druckbehälter mit dem Tragrahmen verriegelt an die Sattelzugmaschine gekoppelt ist, bildet der als selbsttragendes Element ausgebildete Druckbehälter mit dem Tragrahmen zusammen eine Einheit, die es ermöglicht, je nach den Abmessungen des Druckbehälters große Nutzlasten aufnehmen zu können.

Weitere vorteilhafte Ausgestaltungen der Erfindung gehen aus den Unteransprüchen hervor, wobei besonders vorteilhaft die Ausgestaltung nach Anspruch 3 ist, nach der die der rückwärtigen Abrollradachse des Achsaggregats benachbarte Radachse bzw. Radachsen beim Überführen des Druckbehälters in seine Winkelstellung auf die Standfläche der Abrollradachse mittels einer Hubeinrichtung absenkbar ausgebildet ist, wodurch die Standfestigkeit des Druckbehälters während des Entleerungsvorganges wesentlich erhöht wird.

Weiter ist besonders vorteilhaft die Ausgestaltung nach Anspruch 4, nach der zur Erhöhung der Fließbewegung des Druckbehälterinhaltes beim Entladen im Innenraum des Druckbehälters eine Anzahl von in Druckbehälterlängsrichtung verlaufenden, einendseitig mit einer Druckluftzuführungsleitung verbundenen Luftdruckrohren vorgesehen ist, die im bodenseitigen Bereich in einem Abstand von der Druckbehälterwand angeordnet sind und von denen jedes einzelne Luftdruckrohr eine Anzahl von über den Luftdruckrohrumfang verteilt angeordneten Druckluftaustrittsöffnungen aufweist und mit einem druckluftdurchlässigen , jedoch transportproduktundurchlässigen Schlauch aus einem Gewebe aus Textilien oder Kunststoff ummantelt ist. Diese Anordnung von Luftdruckrohren im bodenseitigen Bereich und in einem Abstand von der Druckbehälterwand erbringt den Vorteil, daß die Fließfähigkeit des Transportgutes während des Entleerungsvorganges noch wesentlich erhöht wird. Wesentlich ist hierbei die Abstandshaltung der Luftdruckrohre von der Behälterwand, damit ein glatter Untergrund erhalten bleibt, damit eine gute Fließfähigkeit des Druckbehälterinhaltes erhalten bleibt. Hinzu kommt noch, daß aufgrund dieser Anordnung durch die aus den Druckluftrohren austretende Druckluft das Transportgut im Innenraum des Druckbehälters auflockert, wodurch die zwischen den Staubteilchen des Transportproduktes bestehenden Reibungskräfte mit der Folge einer verbesserten Fließfähigkeit verringert werden. Die Fließfähigkeit des Transportproduktes in Verbindung mit den die Fließfähigkeit erhöhenden Mitteln erfordert keine größeren Winkelstellungen des Druckbehälters für den Entleerungsvorgang als 12°. Es ist daher nicht erforderlich, den Druckbehälter in eine größere Winkelstellung zu überführen. Durch die Abstandshaltung der Druckluftrohre von der Druckbehälterinnenwand ist der Innenraum des Druckbehälters leicht zu reinigen und sauberzuhalten.

Weitere vorteilhafte Ausgestaltungen der Erfindung gehen aus den weiteren Unteransprüchen hervor.

Im folgenden wird der Gegenstand der Erfindung in den Zeichnungen erläutert. Es zeigt

Fig. 1 eine Seitenansicht eines aus einer Sattelzugmaschine und einem Silo-Sattelauflieger bestehenden Sattelkraftfahrzeuges in der Transportstellung,

Fig. 2 in einer Seitenansicht das Sattelkraftfahrzeug gemäß Fig. 1 , jedoch mit in die Entleerungsstellung angekipptem Druckbehälter,

Fig. 3 eine Ansicht mit einem Teilschnitt von vorn auf den Druckbehälter mit in dessen Innenraum angeordneten Druckluftrohren,

Fig. 4 eine Ansicht von vorn auf den Druckbehälter mit der Druckluftzuführungsleitung für die Luftdruckrohre und

Fig. 5 in einer Seitenansicht ein Luftdruckrohr.

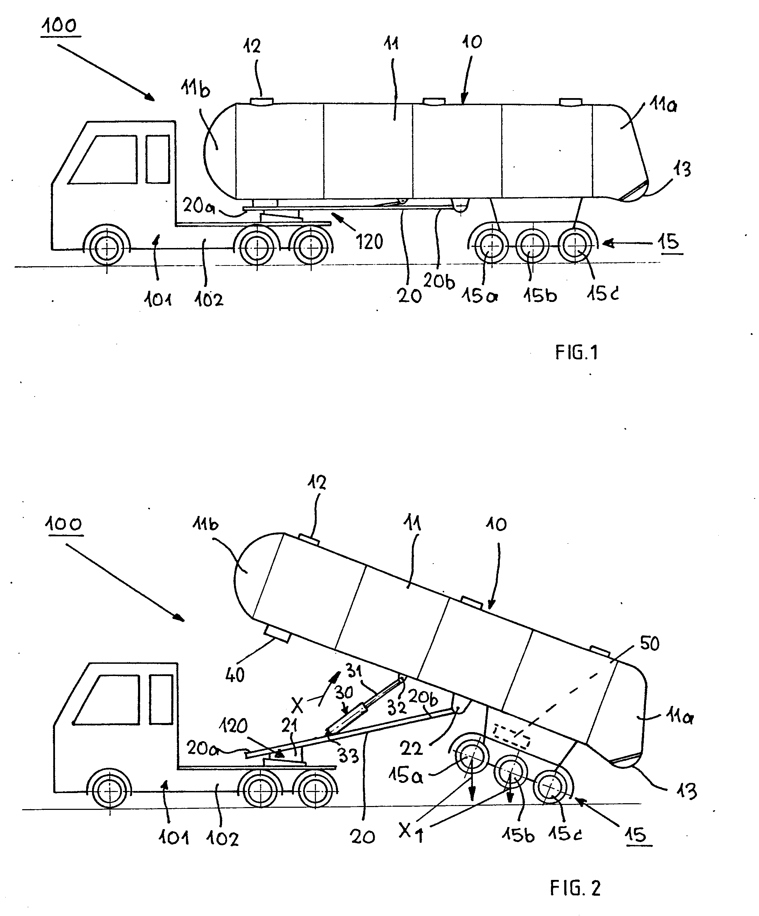

Das in den Fig. 1 und 2 dargestellte, mit 100 bezeichnete Sattelkraftfahrzeug besteht aus einer Sattelzugmaschine 101 und einem Silo-Sattelauflieger 10. Der Silo-Sattelauflieger 10 ist mit der Sattelzugmaschine 101 mit einer in an sich bekannter Weise ausgebildeten Sattelkupplung 120 verbunden, die aus einer Kupplungsplatte 103 am Fahrzeugrahmen 102 der Sattelzugmaschine 101 und einer Aufliegeeinrichtung 21 mit einem Königszapfen zum Kuppeln mit der Kupplungsplatte 103 besteht.

Der Silo-Sattelauflieger 10 besteht aus einem freitragenden Druckbehälter 11 mit mindestens einer Einfüllöffnung 12 und einer im rückwärtigen Bereich 11a bodenseitig vorgesehenen Entleerungseinrichtung 13.

Der Druckbehälter 11 trägt in seinem rückwärtigen Endbereich 11a ein Achsaggregat 15, das nach dem in den Fig. 1 und 2 gezeigten Ausführungsbeispiel drei Radachsen 15a,15b,15c umfaßt, die auch Zwillingsbereifung tragen können.

Ferner steht der Druckbehälter 11 mit einem Tragrahmen 20 in Verbindung, dessen der Sattelzugmaschine 101 zugekehrtes Ende 20a die Aufliegeeinrichtung 21 als Teil der Sattelkupplung 120 trägt. Dieser Tragrahmen 20 weist eine leichtgewichtige Gerüstkonstruktion auf und hat im Fahrbetrieb keine Druckkräfte, kein Gewicht und keine Zugkräfte aufzunehmen. Aus diesem Grunde kann daher der Tragrahmen 20 auch **stabförmig** ausgebildet sein, wenn während des Transportes der Druckbehälter 11 an der Sattelzugmaschine 101 fest verriegelt ist.

Das andere freie Ende 20b des Tragrahmens 20 ist bei 22 an der Unterseite oder seitlich an dem Druckbehälter 11 angelenkt, wobei der Anlenkungspunkt vor dem Achsaggregat 15 liegt.Das Ende 20a ist gelenkig mit der Aufliegereinrichtung 21 verbunden.

Der Tragrahmen 20 dient zur Aufnahme eines druckluftbetriebenen Arbeitszylinders 30, der über die kraftfahrzeugeigene Drucklufteinrichtung mit Druckluft versorgt wird.
Dieser druckluftbetriebene Arbeitszylinder 30 ist bodenseitig an dem Tragrahmen 20 bei 33 angelenkt, während das
freie Ende seines Arbeitskolbens 31 bei 32 an dem Druckbehälter 11 vermittels eines Schwenkgelenkes befestigt
ist. Anstelle eines druckluftbetriebenen Arbeitszylinders
können jedoch auch andere mechanische, hydraulische oder
elektromotorische Hubeinrichtungen verwendet werden.

An seinem der Sattelzugmaschine 101 zugekehrten Ende 11b
ist der Druckbehälter 11 bodenseitig mit einer Verriegelungs- bzw. Kupplungseinrichtung 40 versehen, um
den Druckbehälter 11 während des Transportes mit dem
Tragrahmen 20 oder dem Fahrzeugrahmen 102 der Sattelzugmaschine 101 verriegeln zu können. Aufgrund dieser
Ausgestaltung trägt der Tragrahmen 20 im Fuhrbetrieb
keine Last. Das Gewicht des Transportgutes wird von dem
als selbsttragendes Element ausgebildeten Druckbehälter 11
aufgefangen.

Für den Entleerungsvorgang wird der Druckbehälter 10
vermittels des Arbeitszylinders 30 in die in Fig. 2
gezeigte Kippstellung überführt. Während des Anhebens
des Druckbehälters 10 erfolgt ein Abrollen der rückwärtigen Radachse 15c auf der Unterlage, d.h. der Drehpunkt
des Druckbehälters 11 während des Kippvorganges wird
in den Bereich der rückwärtigen Radachse 15c verlegt.
Besteht das Achsaggregat 15 aus mehr als einer Radachse,
so werden die weiteren, vor der Abrollradachse 15c liegenden Radachsen 15a, 15b mit angehoben. Um die Standfestigkeit des Druckbehälters 11 während des Kippvorganges zu erhöhen, sind die der Abrollradachse 15c vorge-

0086241

schalteten Radachsen 15a und 15b mittels entsprechend ausgebildeter Hubeinrichtungen 50 auf die Standfläche der Radachse 15c in Pfeilrichtung X1 absenkbar, wobei auch die Möglichkeit besteht, nur eine der beiden Radachsen 15a oder 15b abzusenken. Diese Hubeinrichtung 50 , die ebenfalls druckluftbetrieben ausgebildet sein kann, steht in steuertechnischer Verbindung mit dem Arbeitszylinder 30, so daß in Abhängigkeit von der jeweilig erreichten Winkelstellung das selbsttätige Absenken dieser Radachsen vorgenommen wird.

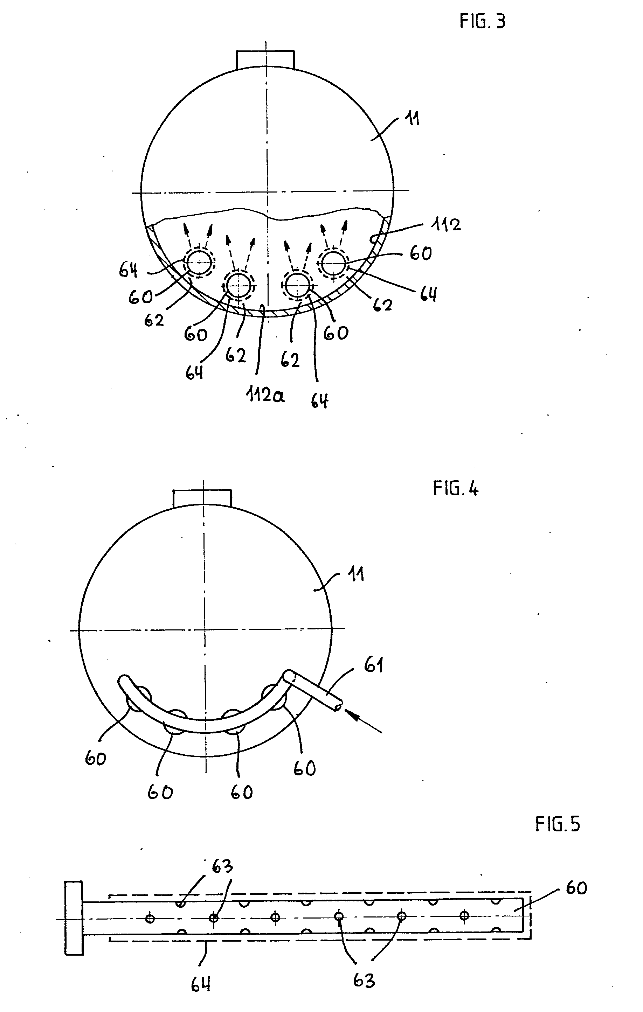

Zur Erhöhung der Fließbewegung des Druckbehälterinhaltes beim Entleeren ist im Innenraum 111 des Druckbehälters 11 eine Anzahl von Luftdruckrohren 60 vorgesehen, die in Druckbehälterlängsrichtung verlaufen und einendseitig mit einer Druckluftzuführungsleitung 61 verbunden sind (Fig. 3 un4 ). Die Luftdruckrohre 60 sind im bodenseitigen Bereich 112a des Druckbehälters in einem Abstand 62 von seiner Behälterwand 112 angeordnet, so daß zwischen der Druckbehälterwand und den Luftdruckrohren 60 ein Zwischenraum ausgebildet ist. Die Luftdruckrohre 60 sind am inneren Umfang der Wand 112 des Druckbehälters 11 angeordnet. Jedes der Luftdruckrohre 60 ist mit einer Anzahl von über den Luftdruckrohrumfang verteilt angeordneten Druckluftaustrittsöffnungen 63 versehen und mit einem druckluftdurchlässigen, jedoch transportproduktundurchlässigen Schlauch 64 aus einem Gewebe aus Textilien oder Kunststoffen ummantelt. Dadurch, daß jedes Druckluftrohr 60 mit einem Textil- oder Kunststoffgewebe ummantelt ist, wird der Austritt von Druckluft aus den Luftaustrittsöffnungen 63 der Druckluftrohre 60 nicht verhindert und auch nicht gemindert, jedoch kann auf der anderen Seite das pulverförmige Transportgut nicht die Druckluftaustrittsöffnungen 63 in den Luftdruckrohren 60 verstopfen oder in diese eindringen.

- 9 -

0086241

Die Länge der Druckluftrohre 60 im Innenraum 111 des Druckbehälters 11 kann der Länge des Druckbehälters entsprechen.
Es besteht jedoch auch die Möglichkeit, die Luftdruckrohre
60 nur in bestimmten Behälterabschnitten anzuordnen, so
z.B. in dem der Sattelzugmaschine 101 zugekehrten Behälterabschnitt.

Die Abstandshalterung der Luftdruckrohre 60 von der Druckbehälterwand 112 kann mittels in der Zeichnung nicht dargestellter Abstandshalter erfolgen.

Der Druckbehälter 11 kann einendseitig mit Einführöffnungen für die Luftdruckrohre 60 versehen sein. An diese
Einführöffnungen schließen sich dann Rohrstutzen an, die
in den Druckbehälterinnenraum 111 hineinreichen und
zur Führung und Halterung der in die Einführöffnungen
eingeschobenen Luftdruckrohre 60 dient, die , wie in
Fig. 5 dargestellt, lanzenartig ausgebildet sein können.
Die freien Enden der Luftdruckrohre 60 , über die die
Druckluft zugeführt wird, sind dann mit entsprechenden,
in der Zeichnung nicht dargestellten Anschluß- und Abdichteinrichtungen versehen, damit eine luftdichte Befestigung an der stirnseitigen Druckbehälterwand und
ein Anschluß der Luftzuführungsleitung 61 erfolgen kann,
über die alle im Innenraum 111 des Druckbehälters 11
angeordneten Luftdruckrohre 60 angeschlossen sind (Fig. 4
und 5). Diese Anordnung und Halterung der Luftdruckrohre
60 im Innenraum 111 des Druckbehälters 11 erbringt den
Vorteil, daß zu Reinigungszwecken die Luftdruckrohre mühelos aus dem Innenraum des Druckbehälters 11 herausgezogen
werden können.

0086241

Patentansprüche

1. Sattelkraftfahrzeug zum Transport von staub- und fließfähigen Produkten, insbesondere von Kohlenstaub, bestehend aus einer Sattelzugmaschine und einem Silo-Sattelauflieger, dadurch gekennzeichnet, daß

a) der Silo-Sattelauflieger (10) als freitragender, mit Einfüllöffnungen (12) versehener Druckbehälter (11) mit im rückwärtigen Endbereich (11a) vorgesehener Entleerungseinrichtung (13) und angeordnetem eine oder mehrere Radachsen (15a,15b,15c) aufweisenden Achsaggregat (15) ausgebildet ist,

b) an dem Druckbehälter (11) vor dem Achsaggregat (15) ein Tragrahmen (20) einendig (20b) angelenkt ist, dessen anderes freies Ende (20a) die Aufliegeeinrichtung (21) für die Sattelkupplung (120) trägt,

c) benachbart zum Anlenkungspunkt (22) des Tragrahmens (20) an dem Druckbehälter (11) ein, vorzugsweise druckluftbetriebener, Arbeitszylinder (30) auf dem Tragrahmen (20) angeordnet ist, dessen Arbeitskolben (31) über ein Schwenkgelenk (32) mit dem Druckbehälter (11) verbunden ist, und

d) das dem Achsaggregat (15) abgekehrte Ende (11b) des Druckbehälters (11) über eine Verriegelungseinrichtung (40) im Bereich der Aufliegeeinrichtung (21) des Tragrahmens (20) mit diesem oder mit dem Fahrzeugrahmen (102) der Sattelzugmaschine (101) lösbar verbunden ist.

2. Sattelkraftfahrzeug nach Anspruch 1, dadurch gekennzeichnet, daß der Druckbehälter (11) mittels des Arbeitszylinders (30) bei gleichzeitigem Abrollen der Räder der rückwärtigen Radachse (15c) des Achsaggregats (15) in eine Winkelstellung von etwa 12° anhebbar ist.

3. Sattelkraftfahrzeug nach Anspruch 1 und 2, dadurch gekennzeichnet, daß die der rückwärtigen Abrollradachse (15c) des Achsaggregats (15) benachbarte Radachse (15b) bzw. Radachsen (15b,15a) beim Überführen des Druckbehälters (11) in seine Winkelstellung auf die Standfläche der Abrollradachse (15a) mittels einer Hubeinrichtung (50) absenkbar ausgebildet ist.

4. Sattelkraftfahrzeug nach Anspruch 1 bis 3, dadurch gekennzeichnet, daß zur Erhöhung der Fließbewegung des Druckbehälterinhaltes beim Entladen im Innenraum (111) des Druckbehälters (11) eine Anzahl von in Druckbehälterlängsrichtung verlaufenden, einendseitig mit einer Druckluftzuführungsleitung (61) verbundenen Druckluftrohren (60) vorgesehen ist, die im bodenseitigen Bereich (112a) in einem Abstand (62) von der Druckbehälterwand (112) angeordnet sind und von denen jedes einzelne Luftdruckrohr (60) eine Anzahl von über den Luftdruckrohrumfang verteilt angeordneten Druckluftaustrittsöffnungen (63) aufweist und mit einem druckluftdurchlässigen, jedoch transportproduktundurchlässigen Schlauch (64) aus einem Gewebe aus Textilien oder Kunststoffen ummantelt ist.

5. Sattelkraftfahrzeug nach Anspruch 4, dadurch gekennzeichnet, daß der Druckbehälter (11) einendseitig Einführöffnungen mit sich an diese anschließenden, in den Druckbehälterinnenraum (111) hineinreichenden Rohrstutzen zum Einführen der mit einem Textil- oder Kunststoffgewebe ummantelten Druckluftrohre (60) aufweist, deren außerhalb des Druckbehälters (11) liegenden Rohrenden über eine Druckluftzuführungsleitung (61) miteinander verbunden sind.

FIG.1

FIG. 2

2/2                    0086241

FIG. 3

FIG. 4

FIG. 5

Europäisches Patentamt

**EUROPÄISCHER RECHERCHENBERICHT**

008624.1
Nummer der Anmeldung

EP 82 10 1036.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE - A1 - 2 413 860 (SCHAUBSTAHL-WERKE) <br> * Seite 4, Zeile 20 bis Seite 5, Zeile 6; Fig. 1 * <br> -- | 1 |
| Y | DE - A1 - 2 834 445 ( JOURDAN) <br> * Fig. 2 * <br> -- | 1 |
| A | DE - U - 7 520 862 (SCHAUBSTAHL-WERKE) <br> * Fig. 1 bis 3 * <br> -- | 1 |
| A | DE - C - 481 309 (AEG) <br> * Fig. 1 bis 3 * <br> -- | 4 |
| A | US - A - 2 030 553 (TILEY) <br> ---- | |

**KLASSIFIKATION DER ANMELDUNG (Int. Cl.³)**

B 60 P 3/22
B 60 P 1/60

**RECHERCHIERTE SACHGEBIETE (Int. Cl.³)**

B 60 P 1/00
B 60 P 3/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 08-09-1982 | LUDWIG |

EPA form 1503.1   06.78